(19)

**Europäisches Patentamt**
**European Patent Office**
**Office européen des brevets**

(11)  **EP 4 734 043 A1**

(12)  **EUROPEAN PATENT APPLICATION**

(43) Date of publication:
 **29.04.2026  Bulletin 2026/18**

(21) Application number: **25210831.1**

(22) Date of filing: **23.10.2025**

(51) International Patent Classification (IPC):
 **G06T 3/4015** $^{(2024.01)}$  **G06T 3/4046** $^{(2024.01)}$

(52) Cooperative Patent Classification (CPC):
 **G06T 3/4015; G06T 3/4046**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH LA MA MD TN**

(30) Priority: **25.10.2024  KR 20240147500**

(71) Applicant: **Samsung Electronics Co., Ltd.**
 **Suwon-si, Gyeonggi-do 16677 (KR)**

(72) Inventors:
 • **KIM, Pilsu**
  **16678 Suwon-Si (KR)**
 • **JO, Younghyun**
  **16678 Suwon-Si (KR)**

 • **KIM, Jungsub**
  **16678 Suwon-Si (KR)**
 • **LEE, Byeong Dae**
  **16678 Suwon-Si (KR)**
 • **LEE, Ser Hoon**
  **16678 Suwon-Si (KR)**
 • **LEE, Hyong Euk**
  **16678 Suwon-Si (KR)**
 • **LEE, Hoonsung**
  **16678 Suwon-Si (KR)**
 • **CHOI, Seungwon**
  **16678 Suwon-Si (KR)**
 • **CHOI, Jongseong**
  **16678 Suwon-Si (KR)**

(74) Representative: **Arnold & Siedsma**
 **Bezuidenhoutseweg 57**
 **2594 AC The Hague (NL)**

(54)  **METHOD AND APPARATUS WITH IMAGE PROCESSING**

(57)  A processor-implemented method with image processing includes acquiring a raw image, obtaining a pixel weight corresponding to a target pixel based on a pixel look-up table (LUT), determining a directional image component of the target pixel based on the raw image and the pixel weight, determining a directional weight of the target pixel based on a gradient LUT, and generating a target image by determining an output value of the target pixel based on the directional weight and the directional image component.

FIG. 4

**Description**

BACKGROUND

1. Field

The following description relates to a method and apparatus with image processing.

2. Description of Related Art

**In** the field of digital image processing, a demosaicing method of processing a raw image acquired by an image sensor may generate a high-quality image. The existing demosaicing technologies mainly use a method of estimating color values by analyzing the correlation with surrounding pixels to reproduce the color information of each pixel.

However, these methods may encounter problems that are difficult to process in real time as the computational complexity increases. Accordingly, a demosaicing method using artificial intelligence and neural network technology may restore images quickly and accurately based on learning the correlation between pixels.

The above information may be presented as a related art to help with the understanding of the disclosure. No arguments or decisions are made as to whether any of the above is applicable as a prior art related to the disclosure.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method with image processing includes acquiring a raw image, obtaining a pixel weight corresponding to a target pixel based on a pixel look-up table (LUT), determining a directional image component of the target pixel based on the raw image and the pixel weight, determining a directional weight of the target pixel based on a gradient LUT, and generating a target image by determining an output value of the target pixel based on the directional weight and the directional image component.

The determining of the output value of the target pixel may include determining a pixel value corresponding to a target color of the target pixel.

The pixel LUT and the gradient LUT may be generated through artificial neural network model training.

The gradient LUT may include one or more gradient LUTs.

The gradient LUT may include a first gradient LUT and a second gradient LUT, and the determining of the directional weight of the target pixel may include obtaining a first directional gradient weight of the target pixel based on the first gradient LUT, obtaining a second directional gradient weight of the target pixel based on the second gradient LUT, and determining the directional weight of the target pixel by normalizing the first gradient weight and the second gradient weight.

The first gradient LUT may include the first gradient weight corresponding to horizontal and vertical gradient information between pixels, and the second gradient LUT may include the second gradient weight corresponding to diagonal gradient information between pixels.

The determining of the directional weight of the target pixel may include obtaining a pixel direction weight based on the pixel LUT, and determining a directional weight of the target pixel by normalizing the first gradient weight, the second gradient weight, and the pixel direction weight.

The gradient LUT may be processed along a different path according to a gradient characteristic input into the gradient LUT, and the path may be divided into a path along which a gradient between pixels of a same color is input and a path along which a gradient between pixels of different colors is input, and operates.

The gradient LUT may be processed along a different path according to a gradient characteristic input into the gradient LUT, and the path may be divided into a path along which a gradient between pixels for a first direction is input and a path along which a gradient between pixels for a second direction is input, and operates.

The gradient LUT may include a plurality of LUTs, and the plurality of LUTs may be divided into a plurality of operations and gradually determine a gradient weight of the target pixel using a value output in each operation as an input for a subsequent operation.

The determining of the directional image component of the target pixel may include obtaining, from the raw image, a pixel value of a surrounding pixel that is present in a predetermined area based on the target pixel and has a target color pixel value, and determining the directional image component of the target pixel based on the surrounding pixel and the pixel weight.

The obtaining of the pixel weight may include determining a difference between the pixel value of the surrounding pixel and the pixel value of the target pixel, and obtaining the pixel weight corresponding to the difference based on the pixel LUT.

The determining of the directional image component of the target pixel may include determining a difference between the pixel value of the surrounding pixel and the pixel value of the target pixel, and determining the directional image component of the target pixel based on the difference and the pixel weight.

The pixel LUT may include a horizontal LUT configured to receive a difference between the target pixel and a surrounding pixel present in a horizontal direction, a vertical LUT configured to receive a difference between the target pixel and a surrounding pixel present in a vertical direction, and a diagonal LUT configured to receive a difference between the target pixel and a surrounding pixel present in a diagonal direction.

**In** one or more general aspects, a non-transitory computer-readable storage medium may store code that, when executed by one or more processors, configures the one or more processors to perform any one, any combination, or all of operations and/or methods disclosed herein.

**In** one or more general aspects, an electronic device includes one or more processors configured to acquire a raw image, obtain a pixel weight corresponding to a target pixel based on a pixel look-up table (LUT), determine a directional image component of the target pixel based on the raw image and the pixel weight, determine a directional weight of the target pixel based on a gradient LUT, and generate a target image by determining an output value of the target pixel based on the directional weight and the directional image component.

For the determining of the output value of the target pixel, the one or more processors may be configured to determine a pixel value corresponding to a target color of the target pixel.

The pixel LUT and the gradient LUT may be generated through artificial neural network model training.

The gradient LUT may include one or more gradient LUTs.

The gradient LUT may include a first gradient LUT and a second gradient LUT, and, for the determining of the directional weight of the target pixel, the one or more processors may be configured to obtain a first directional gradient weight of the target pixel based on the first gradient LUT, obtain a second directional gradient weight of the target pixel based on the second gradient LUT, and determine the directional weight of the target pixel by normalizing the first gradient weight and the second gradient weight.

The first gradient LUT may include the first gradient weight corresponding to horizontal and vertical gradient information between pixels, and the second gradient LUT may include the second gradient weight corresponding to diagonal gradient information between pixels.

For the determining of the directional weight of the target pixel, the one or more processors may be configured to obtain a pixel direction weight based on the pixel LUT, and determine a directional weight of the target pixel by normalizing the first gradient weight, the second gradient weight, and the pixel direction weight.

The gradient LUT may be processed along a different path according to a gradient characteristic input into the gradient LUT, and the path may be divided into a path along which a gradient between pixels of a same color is input and a path along which a gradient between pixels of different colors is input, and operates.

The gradient LUT may be processed along a different path according to a gradient characteristic input into the gradient LUT, and the path may be divided into a path along which a gradient between pixels for a first direction is input and a path along which a gradient between pixels for a second direction is input, and operates.

The gradient LUT may include a plurality of LUTs, and the plurality of LUTs may be divided into a plurality of operations and gradually determine a gradient weight of the target pixel using a value output in each operation as an input for a subsequent operation.

For the determining of the directional image component of the target pixel, the one or more processors may be configured to obtain, from the raw image, a pixel value of a surrounding pixel that is present in a predetermined area based on the target pixel and has a target color pixel value, and determine the directional image component of the target pixel based on the surrounding pixel and the pixel weight.

For the obtaining of the pixel weight, the one or more processors may be configured to determine a difference between the pixel value of the surrounding pixel and the pixel value of the target pixel, and obtain the pixel weight corresponding to the difference based on the pixel LUT.

For the determining of the directional image component of the target pixel, the one or more processors may be configured to determine a difference between the pixel value of the surrounding pixel and the pixel value of the target pixel, and determine the directional image component of the target pixel based on the difference and the pixel weight.

The pixel LUT may include a horizontal LUT configured to receive a difference between the target pixel and a surrounding pixel present in a horizontal direction, a vertical LUT configured to receive a difference between the target pixel and a surrounding pixel present in a vertical direction, and a diagonal LUT configured to receive a difference between the target pixel and a surrounding pixel present in a diagonal direction.

Other features and aspects will be apparent from the following detailed description, the drawings, and the claims.

BRIEF DESCRIPTION OF THE DRAWINGS

FIG. 1 illustrates an example of an imaging system.

FIG. 2 illustrates an example of a demosaicing method.

FIG. 3 illustrates an example of a demosaicing method.

FIG. 4 illustrates an example of a process of interpolating a channel image using a gradient look-up table (LUT) and a pixel LUT.

FIG. 5 illustrates an example of an image processing method.

FIG. 6 illustrates an example of a process of determining a directional image component using a pixel weight.

FIGS. 7A to 7C illustrate an example of a method of configuring a pixel LUT.

FIG. 8 illustrates an example of a Grad LUT HV for processing horizontal and vertical gradient information.

FIG. 9 illustrates an example of a Grad LUT SB for processing diagonal gradient information.

FIGS. 10A and 10B illustrate an example of an image processing method of performing a demosaicing process twice continuously.

FIG. 11 illustrates an example of a method of determining a direction weight without using a pixel direction weight.

FIG. 12 illustrates an example of a method of using an output of a gradient LUT to determine a directional image component.

FIG. 13 illustrates examples of various methods of processing an image using a multi-LUT structure.

FIG. 14 is a flowchart illustrating an example of an image processing method.

FIG. 15 is a diagram illustrating an example of an electronic device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

Although terms such as "first," "second," and "third," or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but is used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on," "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" to specify the presence of stated features, numbers, operations, members, elements, and/or combinations thereof, other embodiments may exist where one or more of the stated features, numbers, operations, members, elements, and/or combinations thereof are not present.

Unless otherwise defined, all terms used herein including technical or scientific terms have the same meaning as commonly understood by one of ordinary skill in the art to which this disclosure pertains and based on an understanding of the disclosure of the present application. It will be further understood that terms, such as those defined in commonly-used dictionaries, should be interpreted as having a meaning that is consistent with their meaning in the context of the relevant art and the disclosure of the present application, and will not be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment," and "one or more examples" has a same meaning as "in one or more embodiments").

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The examples may be implemented as various types of products, such as, for example, a personal computer (PC), a laptop computer, a tablet computer, a smartphone, a television (TV), a smart home appliance, an intelligent vehicle, a kiosk, and a wearable device. Hereinafter, examples will be described in detail with reference to the accompanying drawings. In the drawings, like reference numerals are used for like elements.

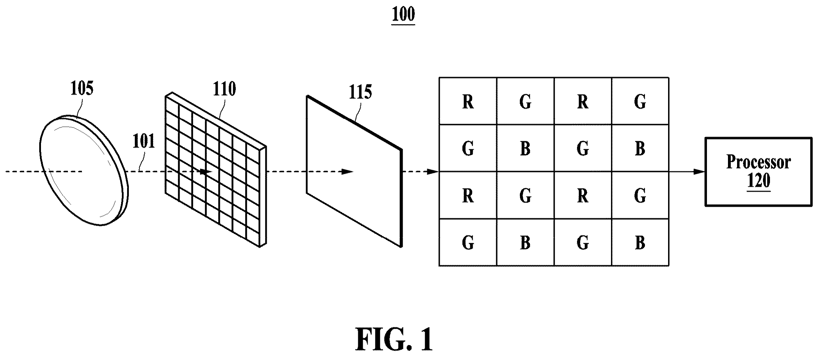

FIG. 1 illustrates an example of an imaging system 100.

Referring to FIG. 1, the imaging system 100 according to an example may be or include part of a mobile device such as a smartphone, a tablet PC, a camera, and/or other devices. The imaging system 100 may include a lens 105, a color filter array (CFA) 110, an image sensor 115, and a processor 120. However, not all the illustrated components are essential. Further, the imaging system 100 may be implemented by more components than the illustrated components, or the imaging system 100 may be implemented by fewer components. For example, the imaging system 100 may further include a controller, a memory, and a display.

One or more of the components of the imaging system 100 (e.g., one or more of the CFA 110, the image sensor 115, and the processor 120) may be instantiated as elements of a single integrated system, such as a system-on-chip (SOC) or other integrated systems. Additionally, in various examples, the CFA 110 and the image sensor 115 may be integrated, as in a case where the pixels of the CFA 110 are formed or arranged on the surface of the image sensor 115.

Light 101 may pass through the lens 105 and the CFA 110 and be detected by the image sensor 115, and the image sensor 115 may generate a CFA input image (e.g., a raw image) using the received light. The lens 105 may include any suitable lens, and may include, as a non-limiting example, a rectilinear lens, a wide field of view (or "fisheye") lens, a fixed focal length lens, a zoom lens, a fixed aperture or variable aperture lens, and the like. The image sensor 115 may include a complementary metal-oxide semiconductor (CMOS) image sensor, a charge-coupled device (CCD) image sensor, or other suitable image sensors.

The image sensor 115 may convert light into an electrical signal using a light receiving element, and in this case, light may be received by specifying the intensity of a visible ray of a specific wavelength through the CFA 110 to obtain the intensity of the light as well as color information, and this may enable color conversion perceived by humans by determining the intensity of light of the wavelength at a corresponding position.

The processor 120 may be an image signal processor (ISP). The processor 120 may perform demosaicing to generate missing pixels of each color channel to generate a red, green, and blue (RGB) image from an input signal sampled by the CFA 110. Examples of artifacts which may occur during demosaicing include blur, zipper/false direction, false color/Moire, and text readability drop.

Machine learning technologies such as deep learning may be applied to image processing and demosaicing, resulting in superior performance compared to classical ISP methods. In the case of demosaicing using machine learning, image processing is generally performed using a convolution filter set structure such as U-NET, residual dense network (RDN), or the like. However, machine learning-based demosaicing has the issue of high complexity. In particular, a convolutional neural network (CNN)-based algorithm has a large number of parameters, which may be a significant burden on hardware implementation, and has a complexity so that it is difficult to apply to commercial ISP hardware.

To solve this issue, a look-up table (LUT)-based algorithm may be used, but it still has a high complexity. When the LUT size is large (for example, 1.67 megabytes (MB)), the LUT may consume too excessive resources to be mounted on commercial ISP hardware and thus, it may be difficult to implement the LUT substantially.

To solve the above technical problem, a method and apparatus of one or more embodiments may reduce the size of the LUT (e.g., to be less than or equal to a predefined size (e.g., 123 kilobytes (KB))). This technical effect has also been verified using Register Transfer Level synthesis. RTL (Register Transfer Level) synthesis results refer to the outputs generated from the process of translating RTL design descriptions into gate-level representations in the context of digital circuit design. The method and apparatus achieves a significant advantage in hardware implementation, as evidenced by the RTL synthesis results. Specifically, the method achieves a synthesized area of 0.4146 mm$^2$ at 2nm. In contrast, conventional art, exemplified by the implementation of the same functional module, occupies 0.311 mm$^2$ at 2nm. While the method's area is slightly larger, it achieves improved image quality and artifact reduction. Furthermore, when compared to a Light CNN Area: 2 mm$^2$ at 2nm (3-Layer CNN with #params 1.8K level) the demosaicing method is significantly reduced in size. This demonstrates the efficiency of the proposed LUT based approach in terms of hardware resources, enabling implementation on resource-constrained devices. As described in detail below, the processor 120 according to an example may perform demosaicing based on a pixel LUT and a gradient LUT. The pixel LUT and the gradient LUT may be generated through artificial neural network learning, and the processor 120 of one or more embodiments may process pixel and gradient information in the LUT manner to simplify a complex operation and perform fast and efficient demosaicing. In addition, the processor 120 of one or more embodiments may perform determinations step by step to gradually obtain weights, divide paths in various manners, and determine weights through the paths suitable for each characteristic, thereby increasing accuracy.

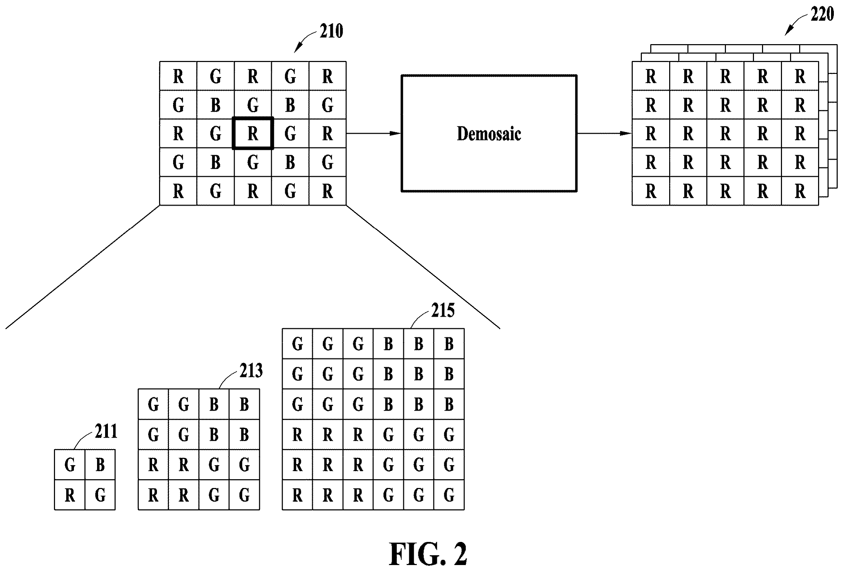

FIG. 2 illustrates an example of a demosaicing method.

Referring to FIG. 2, pixels constituting an image sensor may detect a gray scale. The color value of a pixel may be generated by combining a filter with the pixel. For example, a CFA may be used for the image sensor to color the pixel.

A resulting image acquired by applying the CFA to the image sensor may be defined as a raw image 210. The raw image 210 sampled by the CFA may be referred to as a CFA input image, a CFA pattern, a raw image of a CFA pattern, or the like.

The CFA may be arranged in various patterns. A pattern arranged as in Example 211 may be referred to as a Bayer pattern, a pattern arranged as in Example 213 may be referred to as a tetra pattern, and a pattern arranged as in Example 215 may be referred to as a Nona pattern. For ease of description, the tetra pattern will be described as an example of the CFA, but is not necessarily limited thereto. Depending on the design, various patterns such as a Bayer pattern and a Nona pattern may be used as the CFA.

When a pixel is combined as only one of the R, G, and B filters, one image pixel may detect only one color. Therefore, the colors missing from each pixel may be artificially generated using surrounding pixels. An image viewed by humans in practice is also shown with all the R, G, and B colors together, and this process may be the results artificially generated through surrounding pixels, which is called demosaicing. For example, demosaicing may refer to an operation of generating an RGB image 220 using the raw image 210, which is the input signal sampled by the CFA. In an example, the RGB image 220 may include three channels, where each channel corresponds to a respective one of the R, G, and B colors.

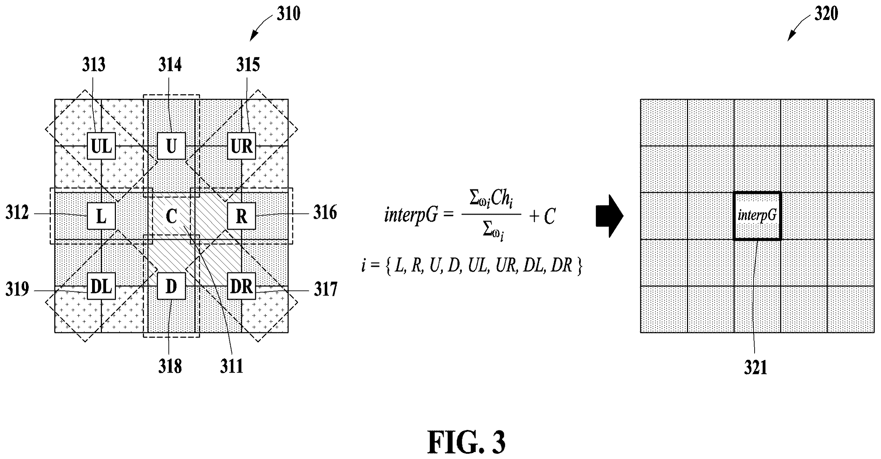

FIG. 3 illustrates an example of a demosaicing method. The description provided with reference to FIGS. 1 and 2 may substantially identically apply to FIG. 3.

A target pixel according to an example may be defined as a pixel whose color value is to be determined through interpolation during the demosaicing process. The target pixel may include any pixel to be interpolated in various CFAs including a tetra pattern, and is not limited to a predetermined color. In FIG. 3, a red (R) color pixel may be used as an example, but the target pixel may be a pixel of another color channel, such as green (G) or blue (B). The target pixel may obtain the final color value by supplementing missing color channel information from surrounding pixels through the interpolation process.

Referring to FIG. 3, a target pixel 311 may be a red (R) color pixel positioned at the center of a raw image 310. The target pixel 311 may ultimately determine the color value through an interpolation process. In each direction, pixels adjacent to the target pixel may be defined as surrounding pixels in a corresponding direction. The surrounding pixels may be distributed in eight directions 312 to 319 based on the target pixel. For example, two pixels adjacent to the top of the target pixel may be present in an up (UP) direction 314, and two adjacent pixels may be present in each of the diagonal directions such as up-left (UL) 313, up-right (UR) 315, down-left (DL) 319, and down-right (DR) 317. Accordingly, in an example, for a given direction, the pixels adjacent to the target pixel may include a first pixel immediately adjacent to the target pixel and a second pixel immediately adjacent to the first pixel in the given direction. Two adjacent pixels may be present in each of these eight directions 312 to 319 such that a total of 16 surrounding pixels may surround the target pixel. The surrounding pixels may provide image components necessary to interpolate the color value of the target pixel 311. The surrounding pixels may have the same color as the target pixel or different colors from the target pixel, and weights according to the differences may be applied to determine an appropriate color value during the interpolation process.

For ease of description, FIG. 3 is described based on an example in which the CFA has a tetra pattern, there are 8-way image components, and the surrounding pixels are two pixels adjacent to the target pixel in each direction, but examples are not necessarily limited thereto. Various patterns such as a Bayer pattern, a Nona pattern, and the like may be used as the CFA depending on the design, 4-way image components of up, down, left, and right may be used, and one pixel or three or more pixels adjacent to the target pixel for each direction may be surrounding pixels, or the number of surrounding pixels may vary depending on the direction.

Demosaicing according to an example may be performed through interpolation. The processor 120 of one or more embodiments may perform demosaicing by obtaining missing information of a corresponding color channel of the target pixel 311 from surrounding pixels through interpolation, which enables high-quality color reconstruction.

Interpolation according to an example may be performed on a target color, for example, a green (G) value, and the final color value of the target pixel 311 may be determined by applying a weight determined from each surrounding pixel. The target color may be a predetermined color of the target pixel to be obtained through the demosaicing process. For example, when the target pixel performs interpolation for the red (R) color, the target color may be red (R), and when the target pixel performs interpolation for the green (G) color, the target color may be green (G). By sequentially complementing the values for color channels, all color values of the target pixel may be ultimately reconstructed.

Equation 1 below, for example, describes the interpolation process of determining the color value of the target pixel.

<p style="text-align:center">Equation 1:</p>

$$InterpG = \frac{\sum \omega_i Ch_i}{\sum \omega_i} + C$$

$$i = \{L, R, U, D, UL, UR, DL, DR\}$$

In Equation 1, $\omega_i$ denotes a directional weight, and $Ch_i$ denotes a directional image component. The pixel value of the interpolated target color of the target pixel may be determined by combining the directional image components and the directional weights determined in the surrounding eight directions. The image components may be information contained in the pixels of an image. An image component may include a chrominance. The chrominance may be information indicating the characteristic of a color in the image.

The directional weight $\omega_i$ may reflect the correlation between the target pixel 311 and a surrounding pixel positioned in a corresponding direction, and the larger the weight, the greater the influence or degree of influence of the surrounding pixel in the corresponding direction on the color interpolation of the target pixel 311.

The directional image component $Ch_i$ denotes the color channel value of surrounding pixels positioned in a corresponding direction. When surrounding pixels have the same color channel as the target pixel, the surrounding pixels may be used directly, but when not, the color values of the pixels may be estimated first. For example, when the target color is G, the G value of the target pixel in the raw image 310 may be obtained through interpolation from the surrounding pixels. However, not all surrounding pixels have only the G value, and may have different color values. In this case, when the surrounding pixels do not have the G value, the G values of the surrounding pixels may be estimated first. The estimated G values of the surrounding pixels may be used to determine the weight, and the G value of the target pixel may be finally interpolated based on the G values of the surrounding pixels. This process may be applied identically to the R and B colors, and the processor 120 may finally obtain values for all R, G, and B channels of the target pixel through interpolation.

All pixels of the raw image 310 may be demosaiced to generate a G-channel image 320. All pixels in the raw image 310 may become a target pixel, and the process of interpolating the G value from the surrounding pixels may be performed for each pixel. The G-channel image 320 may be the final image having pixel values corresponding to the G channel, and may provide a high-quality image restored through an interpolation process. A pixel 321 positioned in the center may indicate the interpolated G value of the target pixel 311 within the G-channel image 320.

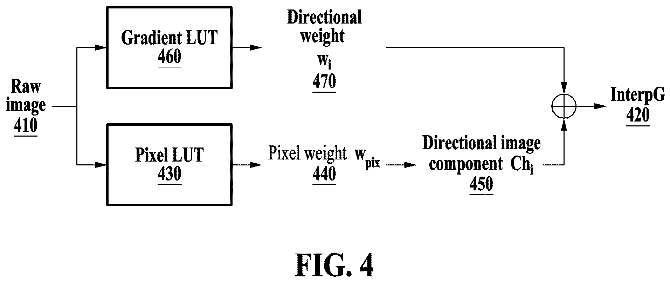

FIG. 4 illustrates an example of a process of interpolating a channel image using a gradient look-up table (LUT) and a pixel LUT. The description provided with reference to FIGS. 1 to 3 may substantially identically apply to FIG. 4.

Referring to FIG. 4, in an example, a method of one or more embodiments of processing the relationship between pixels based on an LUT may be used to interpolate the color value of the target pixel from a raw image 410, thereby effectively performing demosaicing. A G-channel image 420 described in FIG. 4 is merely an example, and may be applied in the same manner to other color channels R and B.

A pixel LUT 430 according to an example may receive the color difference between the target pixel and a surrounding pixel, and provide a pixel weight $w_{pix}$ 440 corresponding to the difference. The pixel LUT 430 may provide the degree of contribution to interpolation in each direction as a weight by comparing the value of a surrounding pixel and the value of the target pixel based on information learned through an artificial neural network. The pixel weight 440 may determine the degree to which a pixel in a predetermined direction contributes to determining the color value of the target pixel by reflecting the difference between pixels, and a different value may be applied to each direction. Put differently, a pixel weight may be defined as a parameter representing a degree of influence or influence a surrounding pixel has on the color interpolation of a target pixel. A degree of influence, in this context, refers to the extent to which a surrounding pixel's color value contributes to the determination of the final color value of the target pixel during the interpolation process. In other words It's a measure of how much a particular surrounding pixel sways the final color decision for the target pixel. The pixel weight 440 may play a role in determining the directional image component $Ch_i$ 450, and the method of one or more embodiments may accurately interpolate the color value of the target pixel based on the pixel weight 440. For example, to accurately interpolate the color value of a target pixel during demosaicing, a pixel weight may be employed to represent the degree of influence or contribution that each surrounding pixel has on the final color value. This pixel weight wpix may be direction-specific and derived from the color difference between the target pixel and its surrounding pixels, as determined by a trained pixel LUT. The pixel LUT maps these color differences to appropriate pixel weight values, allowing the demosaicing process to adaptively interpolate the color value. A higher pixel weight indicates that the corresponding surrounding pixel has a greater influence on the final color value of the target pixel, while a lower weight indicates less influence. These pixel weights are then used in equations to calculate the chrominance in different directions, enabling a more accurate and adaptive chrominance calculation. Preferably, the size of the size of the LUT is less than or equal to a predefined size, preferably the predetermined size is 123 kilobytes.

A gradient LUT 460 may provide a directional weight $w_i$ 470 to determine the degree of contribution to the color interpolation in each direction using directionality information between the target pixel and surrounding pixels. The gradient LUT 460 may provide, as the directional weight 470, information regarding which direction is more reliable in interpolation based on a brightness or color difference between pixels in each direction according to information learned through an artificial neural network. For example, when the color difference between the target pixel and a surrounding pixel in a predetermined direction is small, the direction may play a more important role in interpolation, and accordingly, a greater weight may be applied thereto.

According to Equation 1, the final color value of the interpolated target pixel may be determined by combining the directional image component 450 and the directional weight 470. This process may be repeated for all target pixels, and the respective interpolated color values may be combined to ultimately generate the G-channel image 420.

The pixel LUT 430 and the gradient LUT 460 according to an example may be implemented using a hardware component (e.g., hardware implementing software).

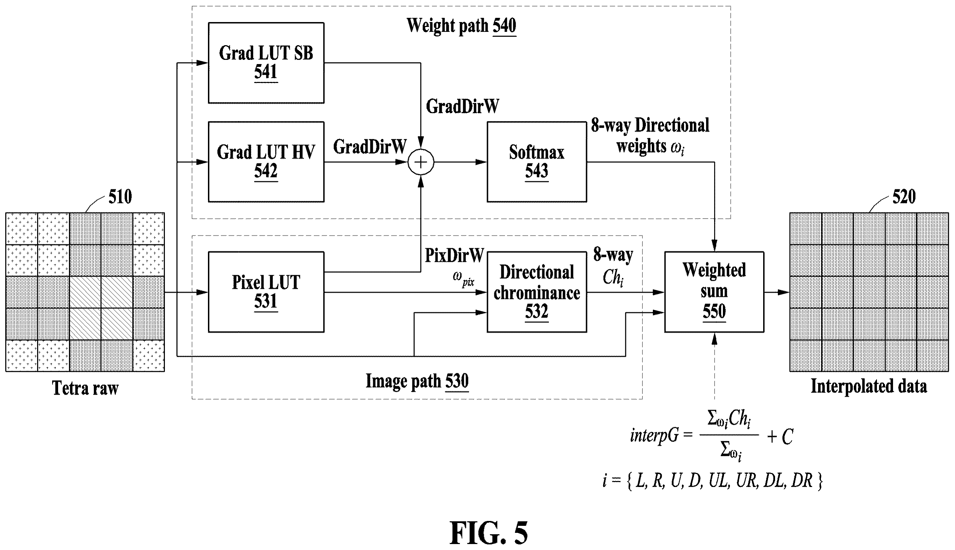

FIG. 5 illustrates an example of an image processing method. The description provided with reference to FIGS. 1 to 4 may substantially identically apply to FIG. 5.

Referring to FIG. 5, an image processing method according to an example may include a weight path 540 and an image path 530, and may show a process of determining a target color value of an interpolated target pixel by determining a directional weight $\omega_i$ and a directional image component $Ch_i$.

First, the image path 530 may be a path to determine the directional image component $Ch_i$. A pixel LUT 531 may receive the color difference between the target pixel and a surrounding pixel, and output a pixel weight $w_{pix}$ and a pixel direction weight PixDirW based on the difference. At this time, the pixel weight may be used to evaluate the contribution of the surrounding pixel to the color interpolation of the target pixel, and the pixel direction weight may be used to determine a subsequent directional weight $\omega_i$. A directional chrominance module 532 may determine a directional image component $Ch_i$ based on color information of a surrounding pixel using the pixel weight.

Meanwhile, the weight path 540 may be a path to determine the directional weight $\omega_i$. The pixel direction weight PixDirW may be obtained from the pixel LUT 531, and may be used together with the gradient information obtained from the gradient LUT to determine the directional weight $\omega_i$. Depending on the example, there may be one or more gradient LUTs. For example, when performing interpolation using 8-way directional weights and directional image components, two LUTs, a Grad LUT HV 542 and a Grad LUT SB 541, may be used. On the other hand, when performing interpolation using 4-way (L, R, U, and D) directional weights, the Grad LUT HV 542 may be used and the Grad LUT SB 541 may not be used. Alternatively, when performing interpolation using 4-way (UL, UR, DL, and DR) directional weights, the Grad LUT SB 541 may be used and the Grad LUT HV 542 may not be used. The Grad LUT HV 542 may provide horizonal and vertical gradient information, and may be referred to as a first gradient LUT. The Grad LUT SB 541 may provide diagonal gradient information, and may be referred to as a second gradient LUT. The gradient information and the pixel direction weight may be normalized by a softmax module 543 and finally converted into a directional weight $\omega_i$ for each direction. During this process, the pixel direction weight PixDirW may be used as an important factor in evaluating the importance of the surrounding pixels in each direction. Although FIG. 5 shows normalizing the gradient information and the pixel direction weight through the softmax module 543, the normalization method is not limited thereto, and various normalization methods may be applied. For example, instead of Softmax, all types of normalization methods such as min-max scaling, standardization (normal distribution scaling), and the like, may be applied.

Finally, a weighted sum module 550 may determine the final color value of the interpolated target pixel by combining the directional image component $Ch_i$ and the directional weight $\omega_i$ according to Equation 1. This process may be performed by summing all image components and weights in a plurality of directions (e.g., 8 directions (L, R, U, D, UL, UR, DL, and DR)). The final interpolated result may be output as a target color channel (e.g., G-channel) image 520. This process may be applied not only to the G channel, but also identically to the R channel and the B channel, and the interpolation results for the color channels may be ultimately combined into a high-quality color image (e.g., a target image).

The term "module" used herein may be, for example, a unit including hardware. The "module" may be interchangeably used with terms such as, for example, component or circuit. The "module" may be a minimum unit of an integrally formed component or part thereof. The "module" may be a minimum unit for performing one or more functions or part thereof. The "module" may be implemented mechanically or electronically. For example, the "module" may include any one or any combination of an application-specific integrated circuit (ASIC) chip, field-programmable gate arrays (FPGAs), and/or a programmable-logic device that performs known operations or operations to be developed.

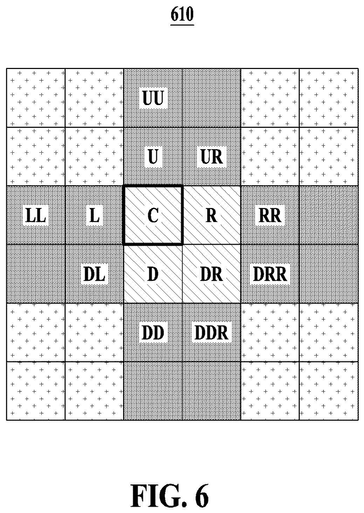

FIG. 6 illustrates an example of a process of determining a directional image component using a pixel weight. The description provided with reference to FIGS. 1 to 5 may substantially identically apply to FIG. 6.

Referring to FIG. 6, a directional chrominance module (e.g., the directional chrominance module 532 of FIG. 5) according to an example may determine a directional image component using a pixel weight. The directional chrominance module may determine the final color value of a target pixel C by reflecting a pixel weight $\omega_{pix}$ output from a pixel LUT in the color differences between the target pixel C and surrounding pixels. The target pixel C and the surrounding pixels R, D, and DR of a raw image 610 may be R color pixels, and the surrounding pixels U, UU, UR, RR, DRR, DDR, DD, DL, L, and LL pixels may be G color pixels.

In the horizontal direction, a chrominance $Ch_L$ between the target pixel C and the left pixels LL and L and a chrominance $Ch_R$ between the target pixel C and the right pixels R and RR may be determined. At this time, pixel weights may be applied respectively on the left and right sides to determine the chrominances of the two directions. The chrominance $Ch_L$ in the left direction may be determined according to Equation 2 below, for example.

Equation 2:

$$Ch_L = \omega_{\text{pix},h0}(LL - C) + (1 - \omega_{\text{pix},h0})(L - C)$$

In Equation 2, $\omega_{pix,h0}$ may be a pixel weight output from a pixel LUT (e.g., the pixel LUT 531 of FIG. 5). Interpolation in the left direction may be divided into two operations: first, a far chrominance reflecting the color difference with respect to the farther pixel LL may be determined, and then, a near chrominance reflecting the color difference with respect to the closer pixel L may be determined. The sum of the two components may determine the chrominance in the left direction.

The chrominance $Ch_R$ in the right direction may be determined according to Equation 3 below, for example.

Equation 3:

$$Ch_R = \omega_{\text{pix},h1}(RR - C) + (1 - \omega_{\text{pix},h1})(pseudoR_{II} - C)$$

The pixel R is not a G color pixel but an R color pixel, and thus, the pixel R may not be used as is. Accordingly, the chrominance $Ch_R$ in the right direction may be determined using pseudoR$_H$ instead of the pixel R. pseudoR$_H$ in Equation 3 may be an interpolated value between the right pixels R and RR, which may be additionally determined by Equation 4 below, for example.

Equation 4:

$$pseudoR_{II} = \omega_{\text{pix},h2}(RR - R) + R$$

For example, the pseudoR$_H$ value may be determined based on the color difference between the pixel RR and the pixel R in the right direction, and the chrominance of the right pixels may be determined based on the pseudoR$_H$ value. During this process, two pixel weights $\omega_{pix,h1}$ and $\omega_{pix,h2}$ obtained from the pixel LUT may be used, and the chrominance in the right direction may be finally interpolated based on the pixel weights $\omega_{pix,h1}$ and $\omega_{pix,h2}$.

The chrominance in the vertical direction may be determined, in the same manner as in the horizontal direction. The component in each direction may be obtained based on the color differences between the target pixel C and the up pixels UU and U and the down pixels DD and D.

The chrominance $Ch_U$ in the up direction may be determined according to Equation 5 below, for example.

Equation 5:

$$Ch_U = \omega_{\mathrm{pix},v0}(UU - C) + (1 - \omega_{\mathrm{pix},v0})(U - C)$$

In Equation 5, $\omega_{\mathrm{pix},v0}$ denotes the weight between the pixel UU and the pixel U, and the far chrominance and the near chrominance reflected according to the weight may be determined, respectively. The color difference between the up pixels may be reflected to determine the chrominance in the up direction.

The chrominance $Ch_D$ in the down direction may be determined according to Equation 6 below, for example.

Equation 6:

$$Ch_D = \omega_{\mathrm{pix},v1}(DD - C) + (1 - \omega_{\mathrm{pix},v1})(pseudoD_V - C)$$

The pixel D is not a G color pixel but an R color pixel, and thus, the pixel D may not be used as is. Accordingly, the chrominance $Ch_D$ in the down direction may be determined using $pseudoD_v$ instead of the pixel D. In Equation 6, $pseudoD_v$ may be an interpolated value between the down pixels DD and D, which may be additionally determined by Equation 7 below, for example.

Equation 7:

$$pseudoD_V = \omega_{\mathrm{pix},v2}(DD - D) + D$$

In the down direction, an intermediate interpolated value called $pseudoD_v$ may be determined, and the final chrominance reflecting the intermediate interpolated value may be determined. During this process, two pixel weights $\omega_{\mathrm{pix},v1}$ and $\omega_{\mathrm{pix},v2}$ obtained from the pixel LUT may be used, and the chrominance in the right direction may be finally interpolated based on the pixel weights $\omega_{\mathrm{pix},v1}$ and $\omega_{\mathrm{pix},v2}$.

The chrominances in the diagonal directions may be determined in the same manner. The component in each direction may be obtained based on the color differences between the target pixel C and the up-left pixel UL, the up-right pixel UR, the down-left pixel DL, and the down-right pixel DR.

The chrominance in the up-left (UL) direction and the chrominance in the up-right (UR) direction may be determined respectively as in Equations 8 and 9 below, for example.

Equation 8:

$$Ch_{UL} = \omega_{\mathrm{pix},d0}(U - C) + \omega_{\mathrm{pix},d1}(L - C)$$

Equation 9:

$$Ch_{UR} = \omega_{\mathrm{pix},d2}(UR - C)$$

$\omega_{\mathrm{pix},d0}$ and $\omega_{\mathrm{pix},d1}$ denote pixel weights between diagonal pixels. The chrominance between the target pixel and the up-left pixel may be interpolated based on the pixel weights $\omega_{\mathrm{pix},d0}$ and $\omega_{\mathrm{pix},d1}$, and the chrominance between the target pixel and the up-right pixel may be interpolated through $\omega_{\mathrm{pix},d2}$.

The chrominance in the down-left (DL) direction and the chrominance in the down-right (DR) direction may be determined respectively as in Equations 10 and 11 below, for example.

Equation 10:

$$Ch_{DL} = \omega_{\mathrm{pix},d3}(DL - C)$$

Equation 11:

$$Ch_{DR} = \omega_{\mathrm{pix},d4}(pseudoR_D - C) + \omega_{\mathrm{pix},d5}(pseudoDR_D - C) + \omega_{\mathrm{pix},d6}(pseudoDD_D - C)$$

In Equation 11, the pixels R, DR, and DD are not G color pixels but R color pixels, and thus, the pixels R, DR, and DD may not be used as are. Accordingly, the chrominance $Ch_{DR}$ in the down-right (DR) direction may be determined using $pseudoR_D$, $pseudoDR_D$, and $pseudoDD_D$ instead of the pixels R, DR, and DD. $pseudoR_D$, $pseudoDR_D$, and $pseudoDD_D$ may be additionally determined by Equation 12 below, for example.

Equation 12:

$$pseudoR_D - \omega_{\text{pix},d7}(RR - R) + R$$

$$pseudoDR_D - \omega_{\text{pix},d8}(DD - D) + D$$

$$pseudoDD_D = \omega_{\text{pix},d9}(DDR - DR) + (1 - \omega_{\text{pix},d9})(DDR - DR) + DR$$

In the down-right (DR) direction, intermediate interpolated values called $pseudoR_D$, $pseudoDR_D$, and $pseudoDD_D$ may be determined, and the final chrominance reflecting the intermediate interpolated values may be determined. During this process, seven pixel weights $\omega_{\text{pix},d3}$, $\omega_{\text{pix},d4}$, $\omega_{\text{pix},d5}$, $\omega_{\text{pix},d6}$, $\omega_{\text{pix},d7}$, $\omega_{\text{pix},d8}$, and $\omega_{\text{pix},d9}$ obtained from the pixel LUT may be used, and the chrominance in the down-left (DL) direction and the chrominance in the down-right (DR) direction may be finally interpolated based on the pixel weights $\omega_{\text{pix},d3}$, $\omega_{\text{pix},d4}$, $\omega_{\text{pix},d5}$, $\omega_{\text{pix},d6}$, $\omega_{\text{pix},d7}$, $\omega_{\text{pix},d8}$, and $\omega_{\text{pix},d9}$.

Three pixel weights $\omega_{\text{pix},h0}$, $\omega_{\text{pix},h1}$, and $\omega_{\text{pix},h2}$ may be used to determine the chrominance in the horizontal direction, three pixel weights $\omega_{\text{pix},v0}$, $\omega_{\text{pix},v1}$, and $\omega_{\text{pix},v2}$ may be used to determine the chrominance in the vertical direction, and ten pixel weights $\omega_{\text{pix},d0}$, $\omega_{\text{pix},d1}$, $\omega_{\text{pix},d2}$, $\omega_{\text{pix},d3}$, $\omega_{\text{pix},d4}$, $\omega_{\text{pix},d5}$, $\omega_{\text{pix},d6}$, $\omega_{\text{pix},d7}$, $\omega_{\text{pix},d8}$, and $\omega_{\text{pix},d9}$ may be used to determine the chrominances in the diagonal directions.

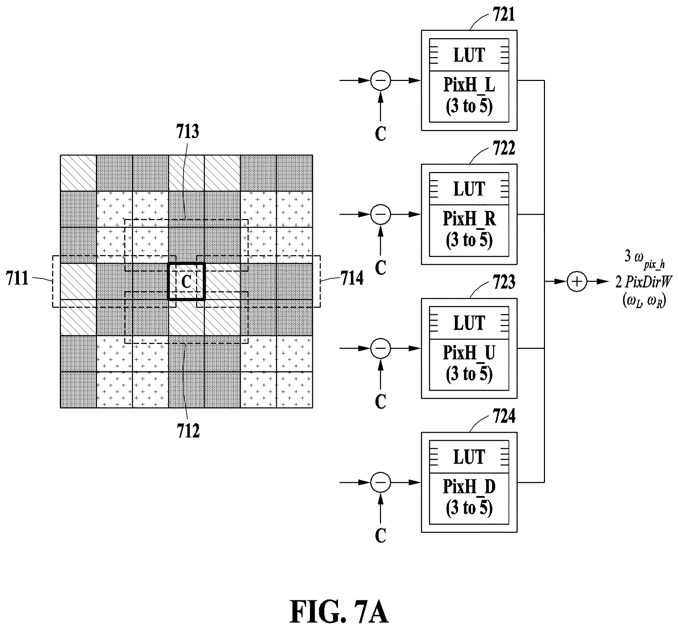

A pixel LUT according to an example may be generated to provide the pixel weights described above. The pixel LUT may be generated through artificial neural network model learning to provide optimal pixel weights. Furthermore, the pixel LUT may be generated for each of the horizontal, vertical, and diagonal directions. An example of a detailed method of configuring a pixel LUT is described below with reference to FIGS. 7A to 7C.

Furthermore, although a method of determining the chrominance using both the far chrominance and the near chrominance is described with reference to FIG. 6, the method of determining the chrominance is not limited thereto. For example, the chrominance may also be determined using only the near chrominance.

FIGS. 7A to 7C illustrate an example of a method of configuring a pixel LUT. The description provided with reference to FIGS. 1 to 6 may substantially identically apply to FIGS. 7A to 7C.

Referring to FIG. 7A, horizontal pixel LUTs 721, 722, 723, and 724 may output three horizontal pixel weights $\omega_{\text{pix},h0}$, $\omega_{\text{pix},h1}$, and $\omega_{\text{pix},h2}$ and two horizontal pixel direction weights $w_L$ and $w_R$ based on the difference values between a target pixel C and surrounding pixels. However, it is described with reference to FIGS. 7A to 7C that a pixel LUT is configured to receive the color difference between a target pixel and a surrounding pixel and provide a pixel weight $w_{\text{pix}}$ corresponding to the difference, but the method of configuring the pixel LUT is not limited thereto. For example, a pixel LUT may also be configured to receive the pixel value of a surrounding pixel as is and provide a pixel weight $w_{\text{pix}}$ corresponding to the pixel value.

The four pixel LUTs 721, 722, 723, and 724 around the target pixel C may receive the difference values between the target pixel and the respective surrounding pixels, i.e., the pixel diff values. Each pixel LUT may have a structure trained to receive the difference values with respect to three horizontal pixels and output three horizontal pixel weights and two horizontal pixel direction weights based on the differences.

For example, the pixel LUT 721 may receive the difference values between the target pixel C and three pixels included in a left area 711. The pixel LUT 721 may output three horizontal pixel weights and two horizontal pixel direction weights based on the differences between the target pixel and the three pixels on the left side. This process may be performed based on data pre-learned by an LUT and used to determine the contribution of interpolation of a target pixel in a corresponding direction.

The pixel LUT 722 may receive the difference values between the target pixel C and three pixels included in a right area 714, and output three horizontal pixel weights and two pixel direction weights in the same manner. Through this, the importance of the surrounding pixels contributing to the color interpolation of the target pixel from the right direction may be determined.

The pixel LUT 723 may output three horizontal pixel weights and two pixel direction weights based on the difference values between the target pixel C and three pixels included in a top area 713. The pixel LUT 723 may provide information for interpolation in the up direction.

The pixel LUT 724 may receive the difference values between the target pixel C and three pixels included in a down area 712, and output three horizontal pixel weights and two pixel direction weights in the same manner. The pixel LUT 724 may provide information for interpolation in the down direction.

The four pixel LUTs 721, 722, 723, and 724 may output the weights determined based on the difference between the target pixel and the surrounding pixels, and the weights may be summed thereafter to determine the final weight in the horizontal direction. Through this, three horizontal pixel weights $\omega_{pix,h0}$, $\omega_{pix,h1}$, and $\omega_{pix,h2}$ and two horizontal pixel direction weights $w_L$ and $w_R$ may be finally determined.

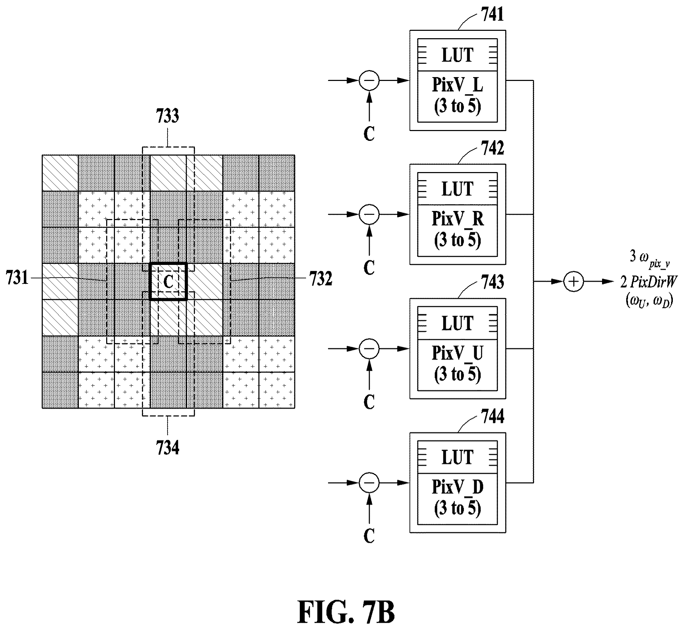

Referring to FIG. 7B, vertical pixel LUTs 741, 742, 743, and 744 may output three vertical pixel weights $\omega_{pix,v0}$, $\omega_{pix,v1}$, and $\omega_{pix,v2}$ and two vertical pixel direction weights $w_U$ and $w_D$ based on the difference values between a target pixel C and surrounding pixels.

The four pixel LUTs 741, 742, 743, and 744 around the target pixel C may receive the difference values between the target pixel and the respective surrounding pixels, i.e., the pixel diff values. Each pixel LUT may have a structure trained to receive the difference values with respect to three vertical pixels and output three vertical pixel weights and two vertical pixel direction weights based on the differences.

For example, the pixel LUT 741 may receive the difference values between the target pixel C and three pixels included in a left area 731 and output three vertical pixel weights and two pixel direction weights. The pixel LUT 741 may provide the contribution of each pixel in vertical interpolation based on the differences between the target pixel and the pixels on the left side.

The pixel LUT 742 may output three vertical pixel weights and two pixel direction weights based on the difference values between the target pixel C and three pixels included in a right area 732. The pixel LUT 742 may provide information for interpolation in the right direction.

The pixel LUT 743 may output three vertical pixel weights and two pixel direction weights based on the difference values between the target pixel C and three pixels included in a top area 733. The pixel LUT 743 may provide information for interpolation in the up direction.

The pixel LUT 744 may receive the difference values between the target pixel C and three pixels included in a down area 734, and output three vertical pixel weights and two pixel direction weights in the same manner. The pixel LUT 744 may provide information for interpolation in the down direction.

The four pixel LUTs 741, 742, 743, and 744 may output vertical pixel weights and pixel direction weights by determining the differences between the target pixel and the surrounding pixels, respectively. The output weights may be summed thereafter, and three vertical pixel weights $\omega_{pix,v0}$, $\omega_{pix,v1}$, and $\omega_{pix,v2}$ and two vertical pixel direction weights $w_U$ and $w_D$ may be finally determined.

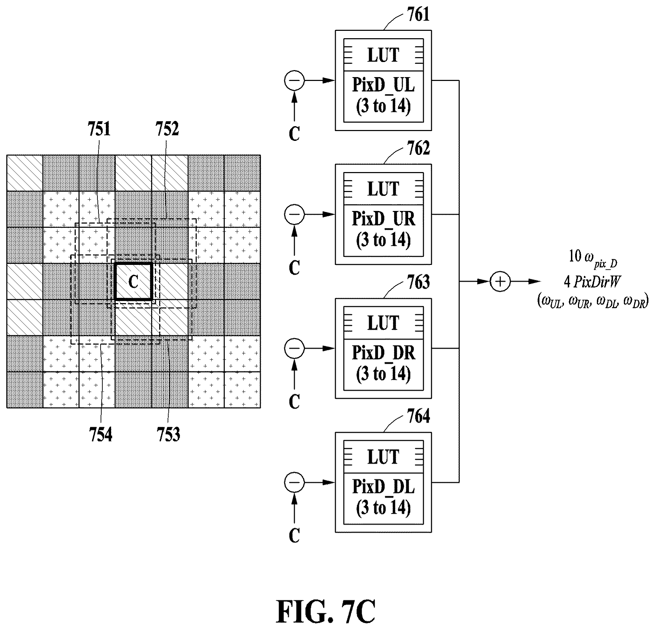

Referring to FIG. 7C, diagonal pixel LUTs 761, 762, 763, and 764 may output ten diagonal pixel weights $\omega_{pix,d0}$ to $\omega_{pix,d9}$ and four vertical pixel direction weights $w_{UL}$, $w_{UR}$, $w_{DL}$, and $w_{DR}$ based on the difference values between a target pixel C and surrounding pixels.

The four pixel LUTs 761, 762, 763, and 764 around the target pixel C may receive the difference values between the target pixel and the respective surrounding pixels, i.e., the pixel diff values. Each pixel LUT may have a structure trained to receive the difference values with respect to three diagonal pixels and output ten diagonal pixel weights and four diagonal pixel direction weights based on the differences.

For example, the pixel LUT 761 may receive the difference values between the target pixel C and three pixels included in an up-left area 751 and output ten diagonal pixel weights and four pixel direction weights. The pixel LUT 741 may provide the contribution of each pixel in diagonal interpolation based on the differences between the target pixel and the pixels on the up-left side.

The pixel LUT 762 may output ten diagonal pixel weights and four pixel direction weights based on the difference values between the target pixel C and three pixels included in an up-right area 752. The pixel LUT 762 may provide information for interpolation in the up-right direction.

The pixel LUT 763 may output ten diagonal pixel weights and four pixel direction weights based on the difference values between the target pixel C and three pixels included in a down-right area 753. The pixel LUT 763 may provide information for interpolation in the down-right direction.

The pixel LUT 764 may receive the difference values between the target pixel C and three pixels included in a down-left area 754, and output ten diagonal pixel weights and four pixel direction weights in the same manner. The pixel LUT 764 may provide information for interpolation in the down-left direction.

The four pixel LUTs 761, 762, 763, and 764 may output diagonal pixel weights and pixel direction weights by determining the differences between the target pixel and the surrounding pixels, respectively. The output weights may be summed thereafter, and ten diagonal pixel weights $\omega_{pix,d0}$ to $\omega_{pix,d9}$ and four vertical pixel direction weights $w_{UL}$, $w_{UR}$, $w_{DL}$, and $w_{DR}$ may be finally output.

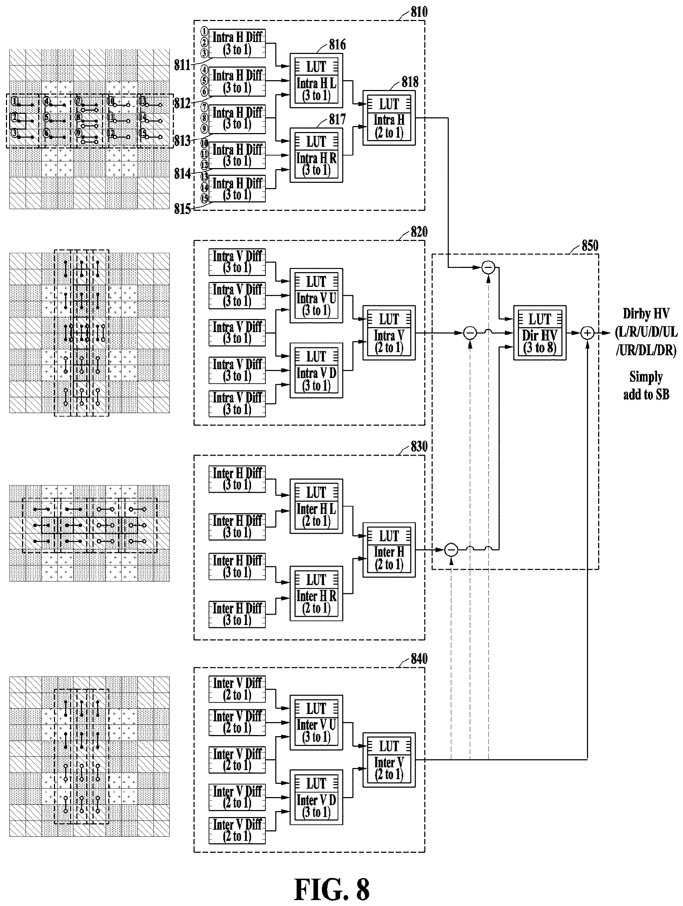

FIG. 8 illustrates an example of a Grad LUT HV for processing horizontal and vertical gradient information. The description provided with reference to FIGS. 1 to 7C may substantially identically apply to FIG. 8.

Referring to FIG. 8, a Grad LUT HV according to an example may include a plurality of LUTs, and may receive a gradient difference between surrounding pixels and provide a gradient weight for each direction.

First, an LUT set 810 may include LUTs for receiving and processing a horizontal gradient value. Each of LUTs 811 to 818 constituting the LUT set 810 may determine the difference between surrounding pixels and determine gradient information based on the difference.

The LUT 811 may receive gradient values between two pixels (e.g., the differences between the two pixels) in Areas 1, 2, and 3, and output weights according to the respective differences. The LUT 812 may receive gradient values of Areas 4, 5, and 6, and similarly, the LUTs 813, 814, and 815 may receive gradient values between pixels in Areas 7 to 15, respectively.

The LUTs 811, 812, 813, 814, and 815 may transmit (predetermined) values corresponding to the received gradient values, as result values, to the LUTs 816 and 817 of the subsequent operation. The LUT 816 may receive the outputs of the LUT 811, the LUT 812, and the LUT 813 and output a corresponding intermediate weight, and the LUT 817 may receive the outputs of the LUT 813, the LUT 814, and the LUT 815 and output an intermediate weight. Finally, the LUT 818 may receive the outputs of the LUT 816 and the LUT 817 and output the final horizontal gradient weight.

For example, the LUT set 810 may be configured in a cascade structure (for example, a three-operation structure of Operation 1: LUTs 811, 812, 813, 814, and 815, Operation 2: LUTs 816 and 817, and Operation 3: LUT 818), thereby processing horizontal gradient information in operations to expand a receptive field and provide more accurate representation power. According to this structure, the LUT set 810 may efficiently determine weights while greatly reducing its size without using a large LUT that processes fifteen inputs at once.

An LUT set 820 may be configured, similar to the LUT set 810, with LUTs for receiving vertical gradient values. The LUT set 820 may receive gradients between vertical pixels and determine the final vertical gradient weight based on the gradients. The LUT set 820 may also be configured in a cascade structure and may gradually determine vertical gradient weights.

An LUT set 830 and an LUT set 840 may be configured similar to the LUT set 810 and the LUT set 820, respectively, but there are significant differences. The LUT set 830 and the LUT set 840 may determine weights based on the difference values between pixels of different colors. An LUT for determining a weight based on the difference value between pixels of different colors may be defined as an Inter LUT. For example, the LUTs included in the LUT set 830 and the LUT set 840, which are Inter LUTs, may process the gradient for the difference between pixels of different colors. On the other hand, an LUT for determining a weight based on the difference value between pixels of the same color may be defined as an Intra LUT. The LUTs included in the LUT set 810 and the LUT set 820 may be Intra LUTs, and may process the difference value between pixels of the same color.

Accordingly, the LUT set 830 may receive and process the gradient value between pixels of different colors in the horizontal direction, and the LUT set 840 may receive the gradient values between pixels of different colors in the vertical direction. Through this, path division may be performed, and each LUT may process a weight suitable for the gradient characteristics according to a path.

Finally, the gradient weights determined by the LUT set 810 to the LUT set 840 may be input into an LUT 850. For example, the differences between the output of the LUT set 840 and the outputs of the LUT sets 810 to 830 may be input into the LUT 850, and the output of the LUT 850 and the output of the LUT set 840 may be summed, so that gradient weights Dirby HV of eight directions (left, right, up, down, up-left, up-right, down-left, and down-right) may be finally output. The 8-way gradient weights Dirby HV, which are the final outputs of the Grad LUT HVs for processing horizontal and vertical gradient information, may be referred to as GradHVDirW. GradHVDirW may provide more precise gradient weights for interpolation and color reconstruction.

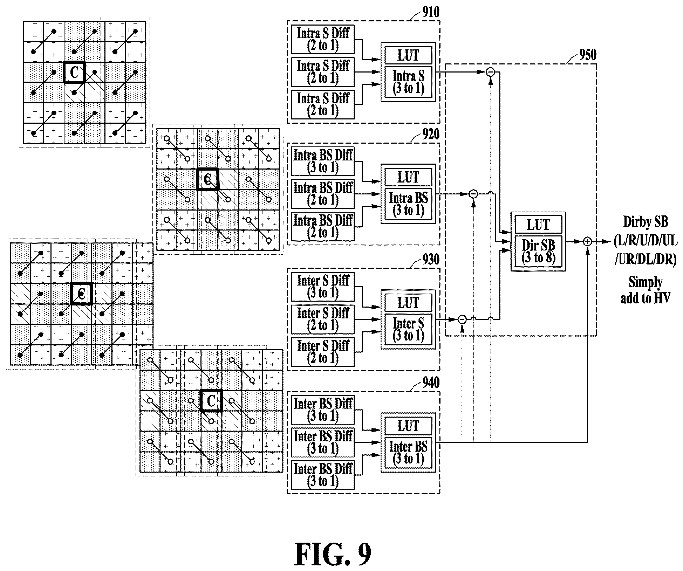

FIG. 9 illustrates an example of a Grad LUT SB for processing diagonal gradient information. The description provided with reference to FIGS. 1 to 8 may substantially identically apply to FIG. 9.

Referring to FIG. 9, a Grad LUT SB according to an example may include a plurality of LUTs, and may receive a diagonal gradient value between surrounding pixels and provide a gradient weight for each direction.

First, an LUT set 910 may include an Intra LUT for processing a gradient value between pixels of the same color in a first diagonal direction (e.g., the direction S). Three LUTs, each receiving three gradient values between pixels of the same color in the first diagonal direction (e.g., the direction S), may output values corresponding to the received gradient values and transmit the result values to an LUT of the subsequent operation. The LUT of the subsequent operation may output the final Intra gradient weight of the first diagonal direction.

An LUT set 920 may include an Intra LUT for processing a gradient value between pixels of the same color in a second diagonal direction (e.g., the direction BS). Three LUTs, each receiving three gradient values between pixels of the same color in the second diagonal direction (e.g., the direction BS), may output values corresponding to the received gradient values and transmit the result values to an LUT of the subsequent operation. The LUT of the subsequent operation may output the final Intra gradient weight of the second diagonal direction.

An LUT set 930 may include an Intra LUT for processing a gradient value between pixels of different colors in the first diagonal direction (e.g., the direction S). Three LUTs, each receiving three gradient differences between pixels of different colors in the first diagonal direction (e.g., the direction S), may output values corresponding to the received gradient values and transmit the result values to an LUT of the subsequent operation. The LUT of the subsequent operation may output the final Inter gradient weight of the first diagonal direction.

An LUT set 940 may include an Inter LUT for processing a gradient value between pixels of different colors in the second diagonal direction (e.g., the direction BS). Three LUTs, each receiving three gradient differences between pixels of different colors in the second diagonal direction (e.g., the direction BS), may output values corresponding to the received gradient values and transmit the result values to an LUT of the subsequent operation. The LUT of the subsequent operation may output the final Inter gradient weight of the second diagonal direction.

Finally, the gradient weights determined by the LUT set 910 to the LUT set 940 may be input into an LUT 950. For example, the differences between the output of the LUT set 940 and the outputs of the LUT sets 910 to 930 may be input into the LUT 950, and the output of the LUT 950 and the output of the LUT set 940 may be summed, so that gradient weights Dirby SB of eight directions (left, right, up, down, up-left, up-right, down-left, and down-right) may be finally output. The 8-way gradient weights Dirby SB, which are the final outputs of the Grad LUTs SB for processing diagonal gradient information, may be referred to as GradSBDirW. GradSBDirW may provide more precise gradient weights for interpolation and color reconstruction.

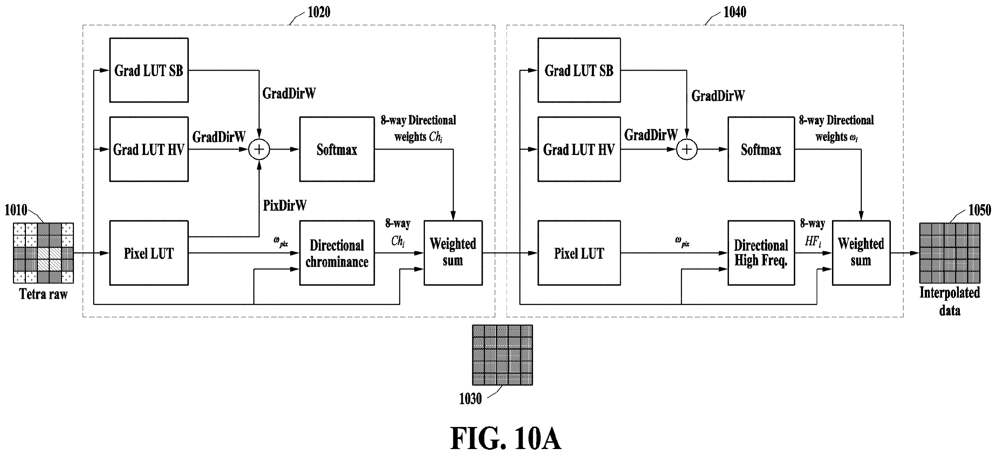

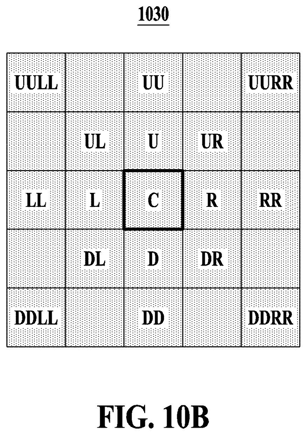

FIGS. 10A and 10B illustrate an example of an image processing method of performing a demosaicing process twice continuously. The description provided with reference to FIGS. 1 to 9 may substantially identically apply to FIGS. 10A and 10B.

Referring to FIG. 10A, in primary demosaicing operation 1020, a primarily interpolated image 1030 may be generated by performing primary demosaicing on a raw image 1010. In primary demosaicing operation 1020, the color value of each pixel may be interpolated using a directional image component $Ch_i$ and a directional weight $\omega_i$ for a target pixel, thereby generating the primarily interpolated image 1030 including a target color (e.g., G-channel) pixel value.

In secondary demosaicing operation 1040, a secondarily interpolated image 1050 may be generated by receiving the primarily interpolated image 1030 and performing secondary demosaicing thereon. Referring to FIG. 10B, when the primarily interpolated image 1030 includes the target color (e.g., G-channel) pixel value of each pixel, secondary demosaicing operation 1040 may not require the intermediate process of generating pseudo-green, and may perform final interpolation by determining high-frequency components based on the differences between pixels surrounding each pixel.

The high-frequency components in the horizontal direction may be determined according to Equation 13 below, for example.

Equation 13:

$$HF_L - \omega_{pix,h0}(LL - C) + \omega_{pix,h1}(L - C)$$

$$HF_R = \omega_{pix,h2}(RR - C) + \omega_{pix,h3}(R - C)$$

In Equation 13, $w_{pix,h0}$, $w_{pix,h1}$, $w_{pix,h2}$, and $w_{pix,h3}$ may be horizontal pixel weights obtained from a pixel LUT for secondary demosaicing.

The high-frequency components in the vertical direction may be determined according to Equation 14 below, for example.

Equation 14:

$$HF_U = \omega_{pix,v0}(UU - C) + \omega_{pix,v1}(U - C)$$

$$HF_D - \omega_{pix,v2}(DD - C) + \omega_{pix,v3}(D - C)$$

In Equation 14, $w_{pix,v0}$, $w_{pix,v1}$, $w_{pix,v2}$, and $w_{pix,v3}$ may be horizontal pixel weights obtained from the pixel LUT for secondary demosaicing.

The high-frequency components in the diagonal directions may be determined according to Equation 15 below, for example.

Equation 15:

$$IIF_{UL} = \omega_{pix,d0}(UL - C) + \omega_{pix,d1}(LL - C)$$

$$IIF_{UR} = \omega_{pix,d2}(UR - C) + \omega_{pix,d3}(RR - C)$$

$$IIF_{DL} = \omega_{pix,d4}(DL - C) + \omega_{pix,d5}(DD - C)$$

$$IIF_{DR} = \omega_{pix,d6}(DR - C) + \omega_{pix,d7}(DDR - C)$$

In Equation 15, $w_{pix,d0}$, $w_{pix,d1}$, $w_{pix,d2}$, $w_{pix,d3}$, $w_{pix,d4}$, $w_{pix,d5}$, $w_{pix,d6}$, and $w_{pix,d7}$ may be diagonal pixel weights obtained from the pixel LUT for secondary demosaicing.

The directional high-frequency components determined as described above may be ultimately used to determine an interpolated color value for each pixel, thereby generating the secondarily interpolated image 1050. Correcting the high-frequency components additionally through secondary demosaicing operation 1040 and restoring detailed information not supplemented in primarily demosaicing operation 1020 may enable color reconstruction with higher accuracy.

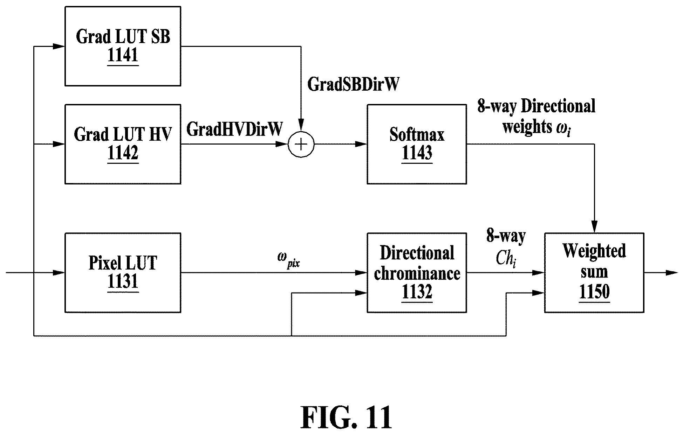

FIG. 11 illustrates an example of a method of determining a direction weight without using a pixel direction weight. The description provided with reference to FIGS. 1 to 10B may substantially identically apply to FIG. 11.

Referring to FIG. 11, a Grad LUT SB 1141 may provide diagonal gradient information, and a Grad LUT HV 1142 may provide horizontal and vertical gradient weights. The two gradient weights GradSBDirW and GradHVDirW may be merged and transmitted as an input of a softmax module 1143. Unlike the example described with reference to FIG. 5, when determining a directional weight, the directional weight may be determined based on GradSBDirW and GradHVDirW respectively output from the Grad LUT SB 1141 and the Grad LUT HV 1142, without using a pixel direction weight PixDirW. The softmax module 1143 may normalize the input gradient value and output 8-way directional weights $\omega_i$.

A pixel LUT 1131 may provide a pixel weight necessary to determine a directional image component $Ch_i$ based on the difference between pixels. The pixel weight may be transmitted to a directional chrominance module 1132 and used to determine the image component $Ch_i$ for each direction.

As a result, the 8-way directional weights determined by the SofMax module 1143 and the 8-way image components determined by the directional chrominance module 1132 may finally be transmitted to a weighted sum module 1150. The weighted sum module 1150 may determine the color value of an interpolated target pixel based on the weighted sum of $\omega_i$ and $Ch_i$ according to Equation 1.

This method may have the characteristic of performing interpolation using only gradient information without using the existing pixel direction weight PixDirW and thus, may be used as a method of performing interpolation effectively while reducing computational complexity in predetermined situations.

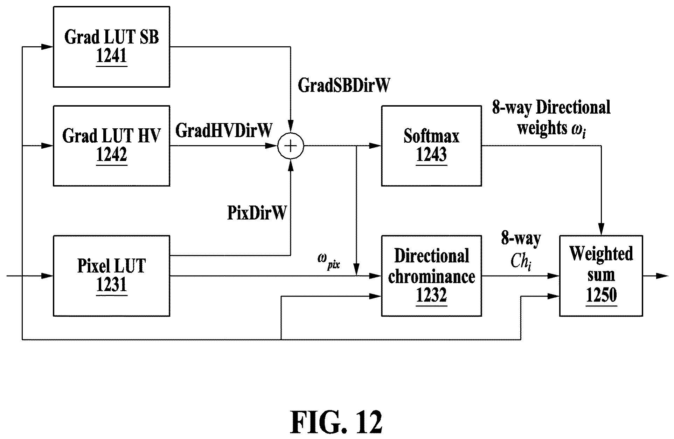

FIG. 12 illustrates an example of a method of using an output of a gradient LUT to determine a directional image component.

Referring to FIG. 12, a Grad LUT SB 1241 may provide a diagonal gradient weight, and a Grad LUT HV 1242 may provide horizontal and vertical gradient weights. The two gradient weights GradSBDirW and GradHVDirW and the pixel direction weight PiDirW output from a Pixel LUT 1231 may be merged and transmitted to a softmax module 1243, and the softmax module 1243 may normalize the input value and output eight directional weights $\omega_i$ for each direction.

A pixel LUT 1231 may provide a pixel weight necessary to determine a directional image component $Ch_i$ based on the difference between pixels. The pixel weight may be transmitted to a directional chrominance module 1232 and used to determine the image component $Ch_i$ for each direction. Here, the outputs of GradSBDirW and GradHVDirW may also be transmitted to the directional chrominance module 1232 and combined with the pixel direction weight PixDirW, such that more accurate information may be provided to determine the chrominance $Ch_i$ in each direction.

As a result, the 8-way directional weights determined by the SofMax module 1243 and the 8-way image components determined by the directional chrominance module 1232 may finally be transmitted to a weighted sum module 1250. The weighted sum module 1250 may determine the color value of an interpolated target pixel based on the weighted sum of $\omega_i$ and $Ch_i$ according to Equation 1.

This method may use the gradient weight obtained from the gradient LUT to determine the chrominance, thereby enabling more accurate color reconstruction during the interpolation process.

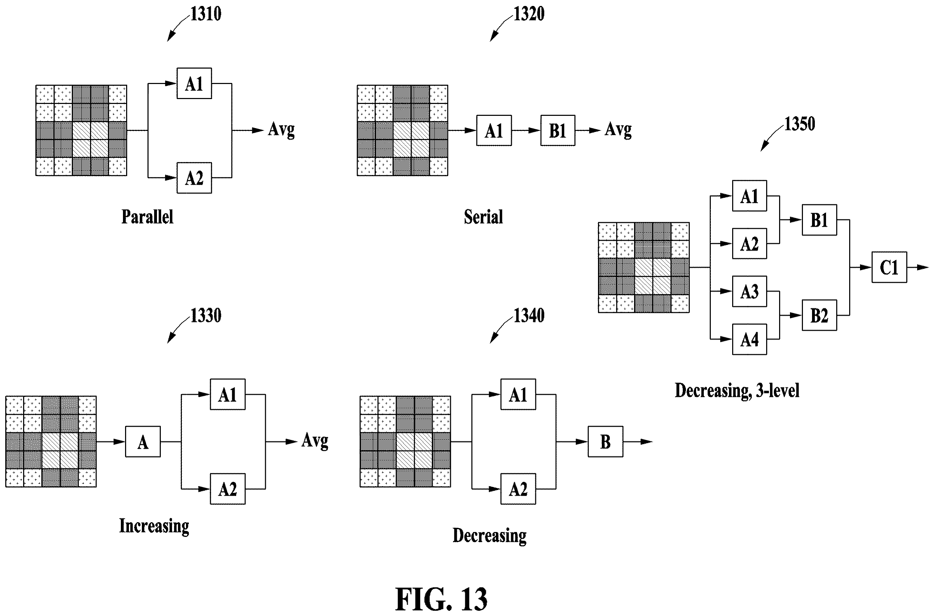

FIG. 13 illustrates examples of various methods of processing an image using a multi-LUT structure.

Referring to FIG. 13, structures 1310 to 1350 may each determine a final result by processing data of a pixel LUT and/or a gradient LUT in a different manner.

In the parallel structure 1310, two LUTs, A1 and A2, may operate in parallel to process data simultaneously. The two LUTs may receive the same input, process the input separately, and sum the two output results into a final result. The parallel method may greatly improve the processing speed by enabling multiple data processing at the same time.

In the serial structure 1320, two LUTs, A1 and A2, may operate in series to process data sequentially. A1 may process the data first, and the result value may be input into B1. B1 may perform additional processing based on the output of A1. The serial method may perform the processing operations sequentially and thus, may enable fine processing but have a slower processing speed than the parallel method.

In the increasing structure 1330, data may be processed first in one LUT, A, and the result value may be input into two LUTs, B1 and B2. The two LUTs, B1 and B2, may receive the same input, process the input separately, and sum the two output results into a final result. This method may be advantageous in gradually processing data elaborately and improving the accuracy of results.

In the decreasing structure 1340, two LUTs, A1 and A2, may process data simultaneously, and then, the results may be combined and reduced to one B. This method may be useful for integrating multiple LUT output results to reduce noise and derive relatively stable results.

In the decreasing, 3-level structure 1350, four LUTs A1, A2, A3, and A4 may operate in parallel to process data, and the results of A1 and A2 may be combined and reduced to B1, and the results of A3 and A4 may be combined and reduced to B2. Thereafter, two LUTs, B1 and B2, may process data separately, and C1 may determine the final result. This method may enable fine processing of data as the number of processing operations increases and thus, may be suitable for complex image processing.

The structures may be combined with each other as determined as necessary, and the complexity of processing may be adjusted by increasing the cascading level. The various structures described above may maximize the processing capabilities of pixel LUTs and gradient LUTs, thereby providing optimized performance in various image processing environments.

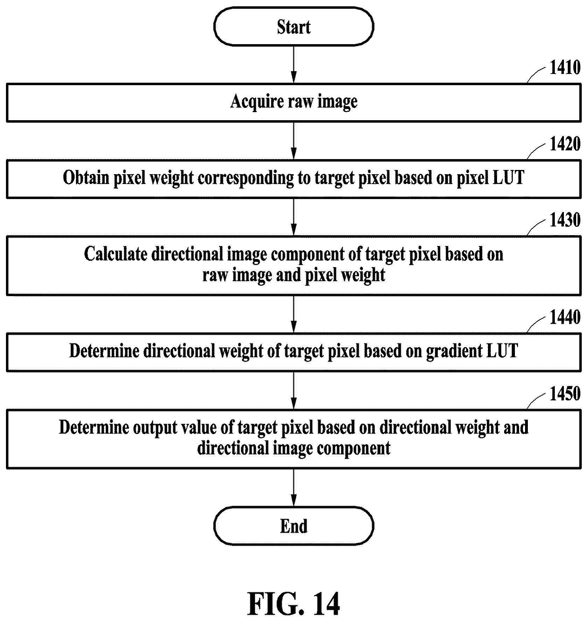

FIG. 14 is a flowchart illustrating an example of an image processing method. The description provided with reference to FIGS. 1 to 13 may substantially identically apply to FIG. 14.

For ease of description, it is described that operations 1410 to 1450 are performed by the processor 120 shown in FIG. 1. However, operations 1410 to 1450 may also be performed by any suitable electronic device and in any suitable system.

Furthermore, the operations of FIG. 14 may be performed in the shown order and manner. However, the order of some operations may change, or some operations may be omitted, without departing from the scope of the shown example. The operations shown in FIG. 14 may be performed in parallel or simultaneously.

In operation 1410, the processor 120 according to an example may acquire a raw image.

In operation 1420, the processor 120 according to an example may obtain a pixel weight corresponding to a target pixel based on a pixel LUT. The processor 120 may determine the difference between the pixel value of the target pixel and the pixel value of a surrounding pixel, and obtain the pixel weight corresponding to the difference based on the pixel LUT.

The pixel LUT may include a horizontal LUT configured to receive the difference between the target pixel and a surrounding pixel present in a horizontal direction, a vertical LUT configured to receive the difference between the target pixel and a surrounding pixel present in a vertical direction, and a diagonal LUT configured to receive the difference between the target pixel and a surrounding pixel present in a diagonal direction.

In operation 1430, the processor 120 according to an example may determine a directional image component of the target pixel based on the raw image and the pixel weight. The processor 120 may determine the directional image component of the target pixel corresponding to a target color of the target pixel.

In operation 1440, the processor 120 according to an example may determine a directional weight of the target pixel based on a gradient LUT. The gradient LUT may include a first gradient LUT and a second gradient LUT.

The processor 120 may obtain a first directional gradient weight of the target pixel based on the first gradient LUT, obtain a second directional gradient weight of the target pixel based on the second gradient LUT, and determine the directional weight of the target pixel by normalizing the first gradient weight and the second gradient weight. The first gradient weight may be GradHVDirW, which is horizontal and vertical gradient information between pixels, and the second gradient weight may be GradSBDirW, which is diagonal gradient information between pixels.

The gradient LUT may be processed along a different path according to the gradient characteristics input into the gradient LUT, and the path may be divided into a path along which a gradient between pixels of the same color is input and a path along which a gradient between pixels of different colors is input, and operate.

The gradient LUT may be processed along a different path according to the gradient characteristics input into the gradient LUT, and the path may be divided into a path along which a gradient between pixels for a first direction is input and a path along which a gradient between pixels for a second direction is input, and operate.

The gradient LUT may include a plurality of LUTs, and the plurality of LUTs may be divided into a plurality of operations, so that the processor 120 may gradually determine a gradient weight of the target pixel using a value output in each operation as an input for a subsequent operation.

In operation 1450, the processor 120 according to an example may determine an output value of the target pixel based on the directional weight and the directional image component. The processor 120 may determine a target color pixel value of the target pixel based on the directional weight and the directional image component. The processor 120 may obtain a pixel direction weight based on the pixel LUT, and determine the directional weight of the target pixel by normalizing the first gradient weight, the second gradient weight, and the pixel direction weight. In an example, operations 1420 to 1440 may be repeated for each pixel of the raw image as the target pixel, and operation 1450 may include generating a target color channel image based on each of the output values of the target pixels. Moreover, operations 1420 to 1440 may be repeated for each of the R, G, and B color channels, operation 1450 may include generating a target color channel image for each of the R, G, and B color channels, and operation 1450 may include combining the target color channel images into a high-quality color image.

The processor 120 may obtain, from the raw image, the pixel value of a surrounding pixel that is present in a predetermined area based on the target pixel and has the target color pixel value, and determine the directional image component of the target pixel based on the surrounding pixel and the pixel weight.

The processor 120 may determine the difference between the pixel value of the target pixel and the pixel value of the surrounding pixel, and determine the directional image component of the target pixel based on the difference and the pixel weight.

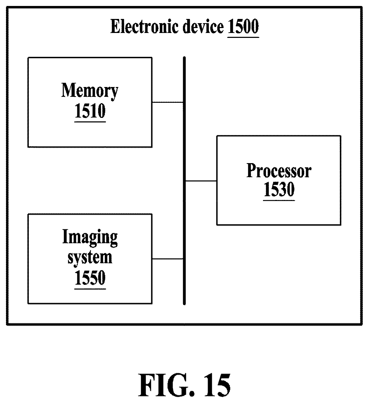

FIG. 15 is a diagram illustrating an example of an electronic device. The description provided with reference to FIGS. 1 to 14 may substantially identically apply to FIG. 15.

Referring to FIG. 15, an electronic device 1500 may include a memory 1510 (e.g., one or more memories), a processor 1530 (e.g., one or more processors), and an imaging system 1550 (e.g., the imaging system 100 of FIG. 1). The electronic device 1500 may be or include, for example, various computing devices such as a mobile phone, a smartphone, a tablet computer, an electronic-book device, a laptop, a personal computer (PC), a desktop computer, a workstation and/or a server, various wearable devices such as a smart watch, smart eyeglasses, a head-mounted display (HMD) and/or smart clothes, various home appliances such as a smart television (TV) and/or a smart refrigerator, and/or other devices such as a smart vehicle, a smart kiosk, an Internet of things (IoT) device, a walking assist device (WAD), a drone, and/or a robot.

The memory 1510 may store instructions (e.g., programs) executable by the processor 1530. For example, the instructions may include instructions for executing the operation of the processor 1530 and/or the operation of each component of the processor 1530. For example, the memory 1510 may include a non-transitory computer-readable storage medium storing code that, when executed by one the processor 1530, configures the processor 1530to perform any one, any combination, or all of the operations and/or methods disclosed herein with references to FIGS. 1-14.

The memory 1510 may be implemented as a volatile memory device or a non-volatile memory device.

The volatile memory device may be implemented as a dynamic random-access memory (DRAM), a static random-access memory (SRAM), a thyristor RAM (T-RAM), a zero capacitor RAM (Z-RAM), or a twin transistor RAM (TTRAM).

The non-volatile memory device may be implemented as an electrically erasable programmable read-only memory (EEPROM), a flash memory, a magnetic RAM (MRAM), a spin-transfer torque (STT)-MRAM, a conductive bridging RAM(CBRAM), a ferroelectric RAM (FeRAM), a phase change RAM (PRAM), a resistive RAM (RRAM), a nanotube RRAM, a polymer RAM (PoRAM), a nano floating gate Memory (NFGM), a holographic memory, a molecular electronic memory device), or an insulator resistance change memory.

The processor 1530 may process data stored in the memory 1510. The processor 1530 may execute a computer-readable code (for example, software) stored in the memory 1510 and instructions triggered by the processor 1530.

The processor 1530 may be a hardware-implemented data processing device having a circuit that is physically structured to execute desired operations. The desired operations may include, for example, code or instructions included in a program.

The hardware-implemented data processing device may include, for example, a microprocessor, a central processing unit (CPU), a processor core, a multi-core processor, a multiprocessor, an application-specific integrated circuit (ASIC), and a field-programmable gate array (FPGA).

The imaging system 1550 may include a lens (e.g., the lens 105 of FIG. 1), a CFA (e.g., the CFA 110 of FIG. 1), an image sensor (e.g., the image sensor 115 of FIG. 1), and a processor (e.g. the processor 120 of FIG. 1). In a non-limiting example, the processor of the imaging system 1550 (e.g. the processor 120 of FIG. 1) may be separate from the processor 1530 and included in the imaging system 1550, and in another non-limiting example, the processor of the imaging system 1550 may be the processor 1530 (e.g. the processor 120 of FIG. 1).

The processor 1530 and/or the processor of the imaging system 1550 may acquire a raw image generated by the lens, the CFA, and the image sensor of the imaging system 1550, obtain a pixel weight corresponding to a target pixel based on a pixel LUT, determine a directional image component of the target pixel corresponding to a target color of the target pixel based on the raw image and the pixel weight, determine a directional weight of the target pixel based on a gradient LUT, and determine a target color pixel value of the target pixel based on the directional weight and the directional image component. The processor 1530 and/or the processor of the imaging system 1550 may perform the operation of demosaicing described with reference to FIGS. 1 to 14 in substantially the same manner. Accordingly, a further description thereof will be omitted herein.

The imaging systems, image sensors, processors, electronic devices, memories, imaging system 100, image sensor 115, processor 120, electronic device 1500, memory 1510, processor 1530, and imaging system 1550 described herein, including descriptions with respect to respect to FIGS. 1-15, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-15 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

**Claims**

1. A processor-implemented method with image processing, the method comprising:

   acquiring a raw image;
   obtaining a pixel weight corresponding to a target pixel based on a pixel look-up table (LUT);
   determining a directional image component of the target pixel based on the raw image and the pixel weight;
   determining a directional weight of the target pixel based on a gradient LUT; and
   generating a target image by determining an output value of the target pixel based on the directional weight and the directional image component.

2. The method of claim 1, wherein the determining of the output value of the target pixel comprises determining a pixel value corresponding to a target color of the target pixel; and/or wherein the pixel LUT and the gradient LUT are generated through artificial neural network model training.

3. The method according to any one of the previous claims, wherein the gradient LUT comprises one or more gradient LUTs.

4. The method of claim 3, wherein

   the gradient LUT comprises a first gradient LUT and a second gradient LUT, and
   the determining of the directional weight of the target pixel comprises:

      obtaining a first directional gradient weight of the target pixel based on the first gradient LUT;
      obtaining a second directional gradient weight of the target pixel based on the second gradient LUT; and
      determining the directional weight of the target pixel by normalizing the first gradient weight and the second gradient weight.

5. The method of claim 4, wherein

   the first gradient LUT comprises the first gradient weight corresponding to horizontal and vertical gradient information between pixels, and
   the second gradient LUT comprises the second gradient weight corresponding to diagonal gradient information between pixels.

6. The method according to any one of the previous claims 4-5, wherein the determining of the directional weight of the target pixel comprises:

obtaining a pixel direction weight based on the pixel LUT; and
determining a directional weight of the target pixel by normalizing the first gradient weight, the second gradient weight, and the pixel direction weight.

7. The method according to any one of the previous claims, wherein

the gradient LUT is processed along a different path according to a gradient characteristic input into the gradient LUT, and
the path is divided into a path along which a gradient between pixels of a same color is input and a path along which a gradient between pixels of different colors is input, and operates.

8. The method according to any one of the previous claims, wherein

the gradient LUT is processed along a different path according to a gradient characteristic input into the gradient LUT, and
the path is divided into a path along which a gradient between pixels for a first direction is input and a path along which a gradient between pixels for a second direction is input, and operates.

9. The method according to any one of the previous claims, wherein

the gradient LUT comprises a plurality of LUTs, and
the plurality of LUTs are divided into a plurality of operations and gradually determine a gradient weight of the target pixel using a value output in each operation as an input for a subsequent operation.

10. The method according to any one of the previous claims, wherein the determining of the directional image component of the target pixel comprises:

obtaining, from the raw image, a pixel value of a surrounding pixel that is present in a predetermined area based on the target pixel and has a target color pixel value; and
determining the directional image component of the target pixel based on the surrounding pixel and the pixel weight.

11. The method of claim 10, wherein the obtaining of the pixel weight comprises:

determining a difference between the pixel value of the surrounding pixel and the pixel value of the target pixel; and
obtaining the pixel weight corresponding to the difference based on the pixel LUT.

12. The method according to any one of the previous claims 10-11, wherein the determining of the directional image component of the target pixel comprises:

determining a difference between the pixel value of the surrounding pixel and the pixel value of the target pixel; and
determining the directional image component of the target pixel based on the difference and the pixel weight.

13. The method according to any one of the previous claims 10-12, wherein the pixel LUT comprises a horizontal LUT configured to receive a difference between the target pixel and a surrounding pixel present in a horizontal direction, a vertical LUT configured to receive a difference between the target pixel and a surrounding pixel present in a vertical direction, and a diagonal LUT configured to receive a difference between the target pixel and a surrounding pixel present in a diagonal direction.

14. A non-transitory computer-readable storage medium storing code that, when executed by one or more processors, configures the one or more processors to perform the method according to any one of the previous claims.

15. An electronic device comprising:

one or more processors configured to:

acquire a raw image;
perform the method according to any one of the previous claims 1-13

**FIG. 1**

FIG. 2

$$interpG = \frac{\sum \omega_i Ch_i}{\sum \omega_i} + C$$

$$i = \{ L, R, U, D, UL, UR, DL, DR \}$$

**FIG. 3**

FIG. 4

**FIG. 5**

Weight path 540

Grad LUT SB 541

Grad LUT HV 542 GradDirW

GradDirW

Softmax 543

8-way Directional weights $\omega_i$

510

Tetra raw

Pixel LUT 531 PixDirW $\omega_{pix}$

Directional chrominance 532

8-way $Ch_i$

Weighted sum 550

Image path 530

520

Interpolated data

$$interpG = \frac{\Sigma \omega_i Ch_i}{\Sigma \omega_i} + C$$

$$i = \{ L, R, U, D, UL, UR, DL, DR \}$$

<u>610</u>

**FIG. 6**

FIG. 7A

FIG. 7B

**FIG. 7C**

**FIG. 8**

**FIG. 9**

FIG. 10A

**1030**

| UULL | | UU | | UURR |
|------|------|------|------|------|
| | UL | U | UR | |
| LL | L | C | R | RR |
| | DL | D | DR | |
| DDLL | | DD | | DDRR |

# FIG. 10B

FIG. 11

**FIG. 12**

FIG. 13

Start

Acquire raw image ⟋ 1410

Obtain pixel weight corresponding to target pixel based on pixel LUT ⟋ 1420

Calculate directional image component of target pixel based on raw image and pixel weight ⟋ 1430

Determine directional weight of target pixel based on gradient LUT ⟋ 1440

Determine output value of target pixel based on directional weight and directional image component ⟋ 1450

End

# FIG. 14

**FIG. 15**

Europäisches
Patentamt

European
Patent Office

Office européen
des brevets

# EUROPEAN SEARCH REPORT

**Application Number**

EP 25 21 0831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/375668 A1 (SHIH YEN-TE [TW]) 25 December 2014 (2014-12-25) | 1-3, 9-11, 13-15 | INV. G06T3/4015 G06T3/4046 |
| A | * figures 1-5 * * paragraph [0014] - paragraph [0019] * | 4-8,12 | |
| A | YANG XIAODONG ET AL: "MCFD: A Hardware-Efficient Noniterative Multicue Fusion Demosaicing Algorithm", IEEE TRANSACTIONS ON CIRCUITS AND SYSTEMS FOR VIDEO TECHNOLOGY, IEEE, USA, vol. 31, no. 9, 9 December 2020 (2020-12-09), pages 3575-3589, XP011876562, ISSN: 1051-8215, DOI: 10.1109/TCSVT.2020.3043423 [retrieved on 2021-09-01] * abstract * * Section III; figure 6 * | 1-15 | |
| A | HUNG-AN CHANG ET AL: "Stochastic Color Interpolation for Digital Cameras", IEEE TRANSACTIONS ON CIRCUITS AND SYSTEMS FOR VIDEO TECHNOLOGY, IEEE, USA, vol. 17, no. 8, 1 August 2007 (2007-08-01) , pages 964-973, XP011190403, ISSN: 1051-8215, DOI: 10.1109/TCSVT.2007.897471 * abstract * * Section III * | 1-15 | **TECHNICAL FIELDS SEARCHED (IPC)** G06T |

-/--

The present search report has been drawn up for all claims

| Place of search | Date of completion of the search | Examiner |
|---|---|---|
| Munich | 19 February 2026 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIACHENG LI ET AL: "Toward DNN of LUTs: Learning Efficient Image Restoration with Multiple Look-Up Tables", ARXIV.ORG, CORNELL UNIVERSITY LIBRARY, 201 OLIN LIBRARY CORNELL UNIVERSITY ITHACA, NY 14853, 25 March 2023 (2023-03-25), XP091469223, * the whole document * | 1-15 | |
| A | KR 102 137 047 B1 (UNIV NAT INCHEON RES & BUSINESS FOUND [KR]) 24 July 2020 (2020-07-24) * paragraph [0010] – paragraph [0015] * * paragraph [0098] * * paragraph [0134] – paragraph [0138] * | 1-15 | |

TECHNICAL FIELDS
SEARCHED        (IPC)

The present search report has been drawn up for all claims

| Place of search | Date of completion of the search | Examiner |
|---|---|---|
| Munich | 19 February 2026 | Salvador, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 0831

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2026

| Patent document cited in search report | Publication date | Patent family member(s) | Publication date |
|---|---|---|---|
| US 2014375668 A1 | 25-12-2014 | NONE | |
| KR 102137047 B1 | 24-07-2020 | NONE | |

EPO FORM P0459

For more details about this annex : see Official Journal of the European Patent Office, No. 12/82